Europäisches Patentamt

European Patent Office

Office européen des brevets

(11) Veröffentlichungsnummer: **0 513 528 A2**

# (12) EUROPÄISCHE PATENTANMELDUNG

(21) Anmeldenummer: **92106200.6**

(22) Anmeldetag: **10.04.92**

(51) Int. Cl.5: **B60G 17/056**

(30) Priorität: **14.05.91 DE 4115596**
**12.03.92 DE 4207803**

(43) Veröffentlichungstag der Anmeldung:
**19.11.92 Patentblatt 92/47**

(84) Benannte Vertragsstaaten:
**DE ES FR GB IT**

(71) Anmelder: **ROBERT BOSCH GMBH**
**Postfach 30 02 20**
**W-7000 Stuttgart 30(DE)**

(72) Erfinder: **Scheffel, Martin, Ing.**
**Sudetenstrasse 70**
**W-7143 Vaihingen-Enzweihingen(DE)**
Erfinder: **Laichinger, Martin, Ing.**
**Im Tiefentobel 11**
**W-7333 Ebersbach(DE)**

(54) **Druckhalteventil.**

(57) Ein Druckhalteventil (20), insbesondere für druckmittelbetätigte Niveauregeleinrichtungen in Fahrzeugen, weist mindestens ein Sitzventil (40) mit Ventilöffnung (36), Ventilsitz (38) und Ventilglied (39) auf, wobei das Ventilglied (39) von einem druckmittelbeaufschlagten Steuerkolben (41) geöffnet wird. Zum Realisieren eines absolut druckdichten Sitzventils (40) mit langer Lebensdauer ist am Ventilsitz (38) eine gegen das Ventilglied (39) abdichtende elastomere Dichtung (48) angeordnet und Druckausgleichsmittel (54) vorgesehen, die bei Druckbeaufschlagung des Steuerkolbens (41) in Öffnungsrichtung des Sitzventils (40) vor dem Ventilglied (39) einen solchen Druck aufbauen, daß mit Öffnungsbeginn eine nur geringe Druckdifferenz an der Dichtung (48) auftritt. Zusätzlich ist das Ventilglied (39) derart ausgebildet, daß es bei Verschiebung in Schließrichtung des Sitzventils (40) mit Vorlauf vor dem Aufsetzen auf der Dichtung (48) die Ventilöffnung (36) im wesentlichen schließt.

Fig. 1

EP 0 513 528 A2

## Stand der Technik

Die Erfindung geht aus von einem Druckhalteventil, insbesondere für druckmittelbetätigte Niveauregeleinrichtungen in Fahrzeugen, der im Oberbegriff des Anspruchs 1 definierten Gattung.

Ein bekanntes Druckhalteventil dieser Art ist als sogenanntes entsperrbares Rückschlagventil ausgebildet (Götz, Lackmann "Hydraulik in Theorie und Praxis", Robert Bosch GmbH, 1981, Seite 151 oder EP 01 76 679 A1 oder DE 37 10 863 A1). Solche Druckhalteventile werden überall dort eingesetzt, wo einerseits im Ruhezustand in der Sperrichtung eine Bewegung des Arbeitskolbens eines an den Arbeitsanschluß angeschlossenen Arbeitszylinders vermieden werden muß, z.B. das Absinken einer Last durch Auftreten von Lecköl, und andererseits auf Befehl eine Bewegung in der vorher gesperrten Richtung ausgeführt werden soll. Das Aufsteuern des Sitzventils erfolgt dabei durch den Steuerkolben, der über die Steuerleitung mit Druckmittel (Fluid oder Druckluft) beaufschlagt wird. Wegen der beim Öffnen und Schließen des Sitzventils am Ventilsitz auftretenden mitunter recht großen Druckdifferenzen und hohen Strömungsgeschwindigkeiten sind Ventilglied und Ventilsitz hohen Belastungen ausgesetzt. Deshalb kann hier zur Abdichtung nur Metall, vorzugsweise Stahl in Frage kommen.

Bei Verwendung solcher Halteventile in hydraulischen Niveauregeleinrichtungen von Kraftfahrzeugen hat sich gezeigt, daß am Sitzventil unvermeidliche Leckagen in der Größenordnung von 0,5 bis 1 cm³/min, je nach Ventilbauart, auftreten können. Dies führt dazu, daß der Fahrzeugaufbau nach einer längeren Standzeit von mehreren Stunden oder Tagen bis auf die Anschlagpuffer am Fahrgestell oder an den Fahrzeugachsen absinkt.

## Vorteile der Erfindung

Das erfindungsgemäße Druckhalteventil mit den kennzeichnenden Merkmalen des Anspruchs 1 hat demgegenüber den Vorteil, daß durch die Dichtung zwischen Ventilsitz und Ventilglied eine dauerhafte Dichtigkeit des Sitzventils erreicht wird. Durch die weiteren erfindungswesentlichen Merkmale ist das Sitzventil sowohl beim Öffnen als auch beim Schließen druckausgeglichen und kein Volumenstrom fließt über die Dichtung. Bei geöffnetem Sitzventil, aber auch bei sich öffnenden bzw. schließenden Sitzventil liegt die Dichtung außerdem außerhalb des Strömungsbereichs mit maximaler Strömungsgeschwindigkeit. Dies alles trägt zur "Schonung" der Dichtung bei und stellt eine lange Lebensdauer des Druckhalteventils sicher.

Durch die in den weiteren Ansprüchen aufgeführten Maßnahmen sind vorteilhafte Weiterbildungen und Verbesserungen des im Anspruch 1 angegebenen Druckhalteventils möglich.

Weil insbesondere während des Öffnens und Schließens des Sitzventils am Ventilsitz keine großen Strömungsgeschwindigkeiten bzw. Druckdifferenzen auftreten können, kann für die Dichtung vorteilhafterweise auch ein elastisches bzw. elastomeres Material verwendet werden, insbesondere z.B. ein Kunststoffdichtring. Dies hat den Vorteil, daß auch auf Dauer eine hervorragende statische Dichtheit erzielbar ist.

Bei der vorliegenden Erfindung ist man, um lange Dauerhaltbarkeit zu erhalten, nicht daran gebunden, zwischen dem Ventilglied und dem Ventilsitz eine metallische Dichtung vorzusehen bzw. an das Ventilglied oder an den Ventilsitz anzuformen. Durch die Verwendung einer elastischen bzw. elastomeren, insbesondere einer weichelastischen Dichtung erhält man bei einfacher Fertigung eine hohe statische Dichtheit. Die elastische bzw. weichelastische Dichtung gewährleistet bei der vorliegenden Erfindung in vorteilhafter Weise hohe statische Dichtheit und lange Dauerhaltbarkeit.

Gemäß einer bevorzugten Ausführungsform der Erfindung sind die Druckausgleichmittel in einfacher Weise durch eine Ausgleichsleitung realisiert, welche die Steuerleitung zum Steuerkolben mit dem den Versorgungsanschluß aufweisenden Ventilraum verbindet und in welcher ein Rückschlagventil oder eine Drossel angeordnet ist. Eine am Versorgungsanschluß angeschlossene Sperrvorrichtung sorgt dabei für die Absperrung des Ventilraums, so daß sich hier ein Druck aufbauen kann. In der Öffnungsendlage des Sitzventils wird die Ausgleichsleitung durch geeignete konstruktive Maßnahmen am Steuerkolben und im Ventilraum abgesperrt. Durch die Absperrung der Ausgleichsleitung wird vorteilhaft ein ständiger Hydraulikölfluß über die Drossel bzw. das Rückschlagventil in den Ventilraum unterbunden. Wird in der Ausgleichsleitung eine Drossel eingesetzt, so ist gemäß einer weiteren Ausbildung der Erfindung in der Steuerleitung eine weitere Drossel anzuordnen, deren Drosselquerschnitt größer ist als der der Drossel in der Ausgleichsleitung. Damit wird verhindert, daß nach Öffnen des Druckhalteventils der Steuerdruck am Steuerkolben zusammenbricht, d.h. auf das Niveau des Aktuatordrucks absinkt, und damit eine Betätigung des Steuerkolbens unterbunden wird.

Wird in der Ausgleichsleitung ein Rückschlagventil eingesetzt, so ist eine Drossel in der Steuerleitung nicht erforderlich. Das Rückschlagventil verhindert einen solchen Druckabfall beim Ventilöffnen und unterbindet zudem die bei der Drossel unvermeidlichen Leckölströme.

Ist der Steuerkolben in einem Steuerzylinder axial verschieblich geführt, wobei die eine von ihm im Steuerzylinder begrenzte Steuerkammer (vordere Steuerkammer) mit der Steuerleitung und die andere von ihm im Steuerzylinder begrenzte hintere Steuerkammer mit dem den Versorgungsanschluß tragenden Ventilraum des Sitzventils verbunden ist, so läßt sich die Ausgleichsleitung in einfacher Weise einmal als Durchgangsbohrung im Steuerkolben, die die Drossel oder das Rückschlagventil enthält, oder durch eine von der Steuerleitung zu der hinteren Steuerkammer führende Leitung mit Rückschlagventil oder Drossel verwirklichen.

Die Absperrung der Ausgleichsleitung in der Öffnungsendlage des Sitzventils erfolgt gemäß einer weiteren Ausführungsform der Erfindung dadurch, daß der Steuerkolben auf der die hintere Steuerkammer begrenzenden Kolbenfläche eine kreisförmige Steuerkante trägt, die zusammen mit einer in der hinteren Steuerkammer ausgebildeten weiteren Steuerkante in der Öffnungsendlage des Sitzventils die Mündung der Ausgleichsleitung in der hinteren Steuerkammer abschließt.

Gemäß einer bevorzugten Ausführungsform der Erfindung ist das Ventilglied des Sitzventils von einer Ventilschließfeder mit in Schließrichtung extrem geringer Vorspannung beaufschlagt. Diese Rückstellfeder bewirkt einerseits eine stets definierte Steuerkolbenposition und stellt andererseits sicher, daß im Öffnungsmoment des Sitzventils der Druck in der Steuerkammer etwas größer ist als der Druck in dem den Arbeitsanschluß aufweisenden zweiten Ventilraum. Da die Vorspannung der Rückstellfeder diese Druckdifferenz wesentlich bestimmt, wird sie sehr klein gehalten.

Gemäß einer bevorzugten Ausführungsform der Erfindung ist das Ventilglied als Kolbenschieber ausgebildet, der mit seiner Stirnfläche auf dem Ventilsitz mit Elastomerdichtung aufsitzt. In dem den Arbeitsanschluß aufweisenden zweiten Ventilraum ist an einer im Abstand vom Ventilsitz angeordneten radialen Ringschulter eine kreisförmige Steuerkante ausgebildet, die zusammen mit einer am Kolbenschieber außen an seiner dem Ventilsitz zugekehrten Kolbenstirnfläche umlaufenden Steuerkante die Ventilöffnung steuert. Diese konstruktive Maßnahme stellt sicher, daß beim Ventilschließen die Ventilöffnung mit Vorlauf vor dem Aufsetzen des Ventilglieds auf der Dichtung geschlossen wird und somit beim Ventilschließen das Sitzventil druckausgeglichen ist. Gleichzeitig wird verhindert, daß im Bereich der vorzugsweise als Elastomerdichtung ausgeführten Dichtung ein großer Volumenstrom mit großer Strömungsgeschwindigkeit auftritt.

Um eine Zerstörung der elastischen Dichtung durch hohe Druckbelastung im Schließzustand zu verhindern, ist gemäß einer weiteren Ausführungsform der Erfindung ein gehäusefester Anschlag vorgesehen, an dem sich das Ventilglied oder der starr mit dem Ventilglied verbundene Steuerkolben in Schließlage des Sitzventils abstützt.

Gemäß einer weiteren Ausführungsform der Erfindung sind zwei Sitzventile mit jeweils einem Ventilsitz und einem Ventilglied in Achsrichtung hintereinander angeordnet, wobei die beiden Ventilglieder von dem Steuerkolben synchron geöffnet werden. Beide, jeweils einen Versorgungsanschluß aufweisenden Ventilräume der Sitzventile sind dabei mit der hinteren Steuerkammer verbunden. Ein solches Druckhalteventil wird bevorzugt bei Nivauregeleinrichtungen von Fahrzeugen mit volltragendem hydropneumatischen Fahrwerk eingesetzt, da pro Achse zwei Arbeitszylinder oder Aktuatoren versorgt werden müssen. Bei diesem Druckhalteventil ist zudem sichergestellt, daß ein Öffnen des Druckhalteventils nur erfolgen kann, wenn die Ventilräume der Sitzventile von ihren Versorgungsanschlüssen her abgesperrt sind oder druckversorgt sind. Legen die üblicherweise zur Druckversorgung bzw. Druckentlastung verwendeten Proportionalventile die Versorgungsanschlüsse an eine Druckmittelsenke, so kann sich wegen der Ausgleichsleitung mit Drossel oder Rückschlagentil kein Druck im Steuerraum vor dem Steuerkolben aufbauen. Damit wird ein sprunghaftes, unkontrolliertes Absinken des Fahrzeugaufbaus bei Inbetriebnahme des Fahrzeugs vermieden.

Gemäß einer bevorzugten Ausführungsform der Erfindung wird das mit zwei Sitzventilen ausgerüstete Druckhalteventil so ausgebildet, daß in der Schließstellung der beiden Sitzventile die beiden Arbeitsanschlüsse über eine Drosselstelle miteinander verbunden sind, die mit Öffnen der Sitzventile abgesperrt wird. Dies hat den Vorteil, daß bei Ausfall der Niveauregelung und dem damit verbundenen automatischen Schließen des Druckhalteventils ein Druckausgleich zwischen den Arbeitszylindern oder Aktuatoren erfolgt und somit die Aktuatordrücke in den jeweils einer Fahrzeugachse zugeordneten Aktuatoren nicht stark unterschiedlich sind, was zu instabilen Fahrzuständen führen würde.

Zeichnung

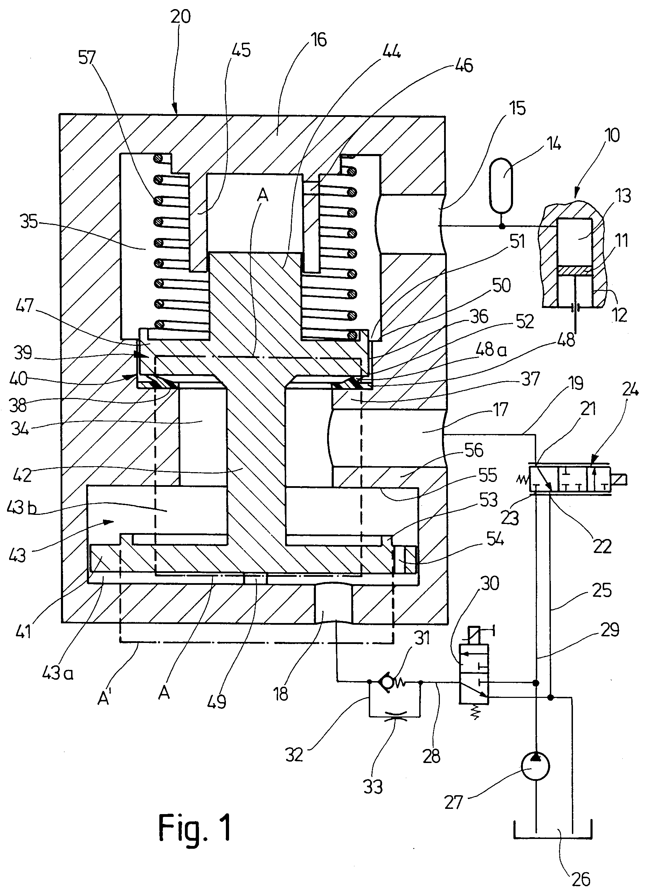

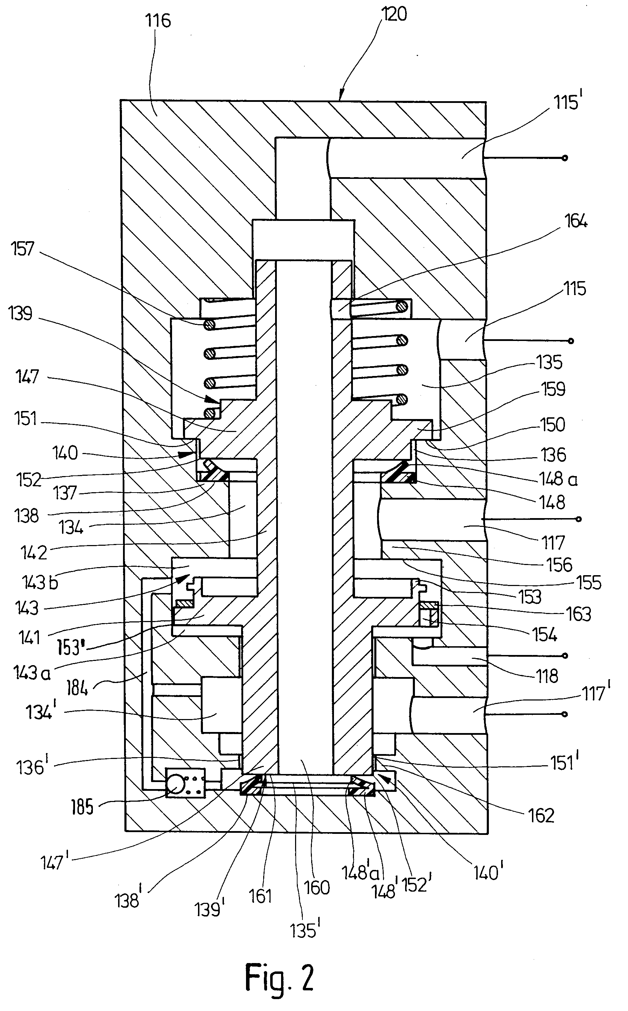

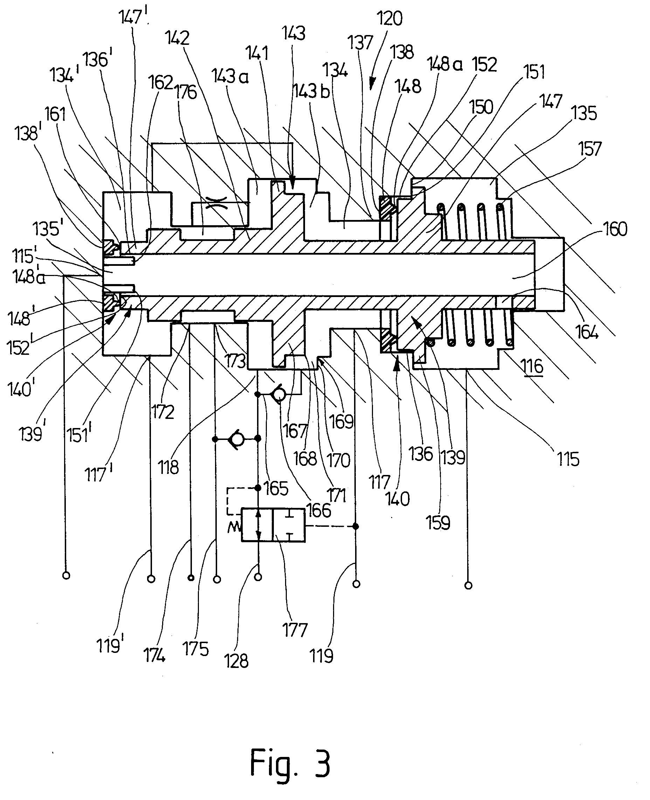

Die Erfindung ist anhand von in der Zeichnung dargestellten Ausführungsbeispielen in der nachfolgenden Beschreibung näher erläutert. Es zeigen: Figur 1 eine Prinzipschaltskizze einer Drucksteuervorrichtung für einen hydraulischen Arbeitszylinder mit im Längsschnitt schematisch dargestelltem Druckhalteventil, Figur 2 einen Längsschnitt eines Druckhalteventils für eine Niveauregeleinrichtung von Fahrzeugen, schematisch dargestellt und Figur 3 eine gleiche Darstellung wie in Figur 2 gemäß einem weiteren Ausführungsbeispiel.

Beschreibung der Ausführungsbeispiele

Die in Figur 1 im Prinzipschaltbild dargestellte Druckregeleinrichtung dient beispielsweise zum Heben und Senken einer Last, wobei die Last auch der Fahrzeugaufbau eines Fahrzeugs sein kann. Die Last ist dabei an einem Arbeitskolben 11 eines hydraulischen Arbeitszylinders oder Aktuators 10 befestigt, der in einem Hydraulikzylinder 12 axial verschieblich geführt ist und mit diesem eine Arbeitskammer 13 begrenzt. Die Arbeitskammer 13 ist einerseits mit einem Druckspeicher 14 und andererseits mit einem Arbeitsanschluß 15 eines Druckhalteventils 20 verbunden, der in dessen Ventilgehäuse 16 eingebracht ist. Das Ventilgehäuse 16 weist ferner einen Versorgungsanschluß 17 und einen Steueranschluß 18 auf. Der Versorgungsanschluß 17 ist über eine Druckleitung 19 an einem ersten Ventilanschluß 21 eines 3/3-Wegeventils 24 mit Proportionalmagneten und Federrückstellung, im folgenden Proportionalventil 24 genannt, angeschlossen. Der zweite Ventilanschluß 22 des Proportionalventils 24 ist mit einer Entlastungsleitung 25, die zu einem Tank 26 für Hydrauliköl führt, und der dritte Ventilanschluß 23 mit einer zum Ausgang einer Förderpumpe 27 führenden Förderleitung 29 verbunden, die Hydrauliköl aus dem Tank 26 fördert. Das Proportionalventil 24 ist so ausgebildet, daß der erste Ventilanschluß 21 in einer ungesteuerten (stromlos) Ventilendlagenstellung mit dem zweiten Ventilanschluß 22 und in einer mit Maximalstrom ausgesteuerten weiteren Endlagenstellung über den dritten Ventilanschluß 23 mit der Förderleitung 29 verbunden ist. In einer Mittelstellung des Proportionalventils 24 sind alle drei Ventilanschlüsse 21 bis 23 abgeschlossen. Der Steueranschluß 18 des Druckhalteventils 20 ist über eine Steuerleitung 28 mit einem als 2/2-Wegemagnetventil ausgebildeten Vorsteuerventil 30 verbunden. Das Vorsteuerventil 30 ist derart ausgebildet, daß es die Steuerleitung 28 in seiner ungesteuerten (stromlos) Grundstellung mit der zum Tank 26 führenden Entlastungsleitung 25 und in seiner umgesteuerten (bestromt) Arbeitsstellung mit der Förderleitung 29 verbindet. In der Steuerleitung 28 ist ein Rückschlagventil 31 mit zum Vorsteuerventil 30 weisender Druchflußrichtung und ein Bypass 32 zu dem Rückschlagventil 31 angeordnet, in dem eine Drossel 33 liegt.

In dem Ventilgehäuse 16 ist ein erster Ventilraum 34 und ein zweiter Ventilraum 35 ausgebildet, die über eine Ventilöffnung 36 miteinander in Verbindung stehen. In dem ersten Ventilraum 34 mündet der Versorgungsanschluß 17 und in dem zweiten Ventilraum 35 der Arbeitsanschluß 15. Auf einem in den ersten Ventilraum 34 hineinragenden Gehäuseabsatz 37 ist ein Ventilsitz 38 ausgebildet, der mit einem Ventilglied 39 zusammenwirkt. Ventilsitz 38 und Ventilglied 39 bilden zusammen ein Sitzventil 40, das von einem Steuerkolben 41 in Öffnungsrichtung antreibbar ist. Der Steuerkolben 41 ist ebenso wie das Ventilglied 39 vorzugsweise einstückig an einem Steuerschieber 42 ausgebildet, der im Ventilgehäuse 16 axial verschieblich geführt ist. Der Steuerkolben 41 liegt dabei in einem im Ventilgehäuse 16 ausgebildeten Steuerraum 43 und teilt diesen in eine vordere Steuerkammer 43a, in welcher der Steueranschluß 18 mündet, und in eine hintere Steuerkammer 43b, die mit dem ersten Ventilraum 34 verbunden ist. Der Steuerschieber 42 trägt auf seinem vom Steuerkolben 41 abgekehrten Ende einen Führungskolben 44, der in einem vom Ventilgehäuse 16 in den zweiten Steuerraum 35 koaxial vorspringenden Führungsstutzen 45 eintaucht und darin axial verschieblich geführt ist. Nahe dem Grund des Führungsstutzens 45 durchdringt mindestens eine radiale Bohrung 46 die Zylinderwand des Führungsssstutzens 45. Wird diese Bohrung 46 als Drossel ausgeführt, können Führungskolben 44 und Führungsstutzen 45 zur Dämpfung der Verschiebebewegung des Steuerschiebers 42 herangezogen werden.

Das Ventilglied 39 des Sitzventils 40 ist als Kolbenschieber 47 ausgebildet, der mit seiner Stirnfläche über eine am Ventilsitz 38 angeordnete elastomere Dichtung 48 auf dem Ventilsitz 38 aufliegt. Die Dichtung 48 legt sich dabei mit einer Dichtlippe 48a an die Stirnfläche des Kolbenschiebers 47 an. Zur Vermeidung einer zu großen Druckbelastung der Dichtung 48 stützt sich der Steuerschieber 42 über einen Anschlagnocken 49 am Ventilgehäuse 16 ab. Im Ausführungsbeispiel ist der Anschlagnocken 49 an der die vordere Steuerkammer 43a begrenzenden Kolbenfläche des Steuerkolbens 41 zentral angeordnet. Im Abstand vom Ventilsitz 38, in Öffnungsrichtung des Kolbenschiebers 47 gesehen, ist am Ventilgehäuse 16 eine zurückspringende radiale Ringschulter 50 ausgebildet, deren dem Kolbenschieber 47 zugekehrte vordere Kante eine kreisförmige Steuerkante 51 bildet. Diese Steuerkante 51 wirkt mit einer am Kolbenschieber 47 außen an seiner dem Ventilsitz 38 zugekehrten Kolbenstirnfläche umlaufenden Steuerkante 52 zum Öffnen und Schließen der Ventilöffnung 36 des Sitzventils 40 zusammen. Sobald die Steuerkante 52 die Steuerkante 51 in Öffnungsrichtung überfährt, ist die Ventilöffnung 36 freigegeben. Überfährt die Steuerkante 52 die Steuerkante 51 in Schließrichtung, wird die Ventilöffnung 36 bis auf einen kleinen Lecköfluß über den Kolbenschieberrand wieder geschlossen, was somit mit Vorlauf gegenüber dem Aufsetzen des Kolbenschiebers 47 auf der Dichtung 48 erfolgt.

Der Außendurchmesser des Steuerkolbens 41 ist größer bemessen als der Auflagedurchmesser des Kolbenschiebers 47 auf dem Ventilsitz 38 bzw. der Dichtung 48. Auf der die hintere Steuerkammer 43b begrenzenden Kolbenfläche des Steuerkolbens 41 ist ein Ringsteg 53 angeordnet, dessen Außendurchmesser größer ist als der Auflagedurchmesser des Kolbenschiebers 47 auf der Dichtung 48. Außerhalb dieses Ringstegs 53 ist in den Steuerkolben 41 eine ganz durchgehende Drosselbohrung 54 eingebracht, die als Ausgleichsleitung die vordere und hintere Steuerkammer 43a, 43b miteinander verbindet. Der Querschnitt dieser Drosselbohrung 54 ist kleiner bemessen als der Drosselquerschnitt der Drossel 33 im Bypass 32 in der Steuerleitung 28. Am Ende des maximalen Verschiebehubs des Steuerschiebers 42 setzt der Ringsteg 53 auf einer die hintere Steuerkammer 43b begrenzenden Ringfläche 55 eines radial vorspringenden Gehäuseabsatzes 56 des Ventilgehäuses 16 auf, wodurch die Drosselbohrung 54 von der hinteren Steuerkammer 43b abgetrennt wird. Die Verschiebebewegung des Steuerschiebers 42 erfolgt gegen eine in dem zweiten Ventilraum 35 angeordnete Ventilschließfeder 57, die sich einerseits am Kolbenschieber 47 und andererseits am Ventilgehäuse 16 abstützt. Die in Schließrichtung des Sitzventils 40 wirkende Vorspannkraft der Ventilschließfeder 57 ist extrem gering ausgelegt.

Die Funktionsweise der Drucksteuervorrichtung ist wie folgt:

Zur Druckerhöhung oder zum Druckabbau in der Arbeitskammer 13 des Aktuators 10 wird das Proportionalventil 24 in seine mittlere Sperrstellung oder leicht in Richtung Druckzufuhr umgesteuert. Gleichzeitig wird das Vorsteuerventil 30 umgesteuert, so daß die Steuerleitung 28 mit der Förderleitung 29 verbunden ist. Über die Drossel 33 in der Steuerleitung 28 strömt Hydrauliköl in die vordere Steuerkammer 43a und über die Drosselbohrung 54 baut sich in der hinteren Steuerkammer 43b und in dem mit dieser verbundenen und von dem Proportionalventil 24 abgesperrten ersten Ventilraum 34 Druck auf. Ist der Druck $p_1$ in der vorderen Steuerkammer 43a so weit angestiegen, daß die Bedingung

$$p_1 \cdot A \geq p_2 \cdot A + F_{57} \qquad (1)$$

erfüllt ist, d.h. der linke Term von Gl. (1) geringfügig größer als der rechte Term ist, beginnt das Sitzventil 40 sich zu öffnen. $p_2$ ist dabei der Druck in dem zweiten Ventilraum 35 und A die wirksame Druckbeaufschlagungsfläche am Koblenschieber 47 und am Steuerkolben 41, die in Figur 1 durch strichpunktierte Umrahmung gekennzeichnet ist. $F_{57}$ ist die Federkraft der Ventilschließfeder 57, die - wie beschrieben - sehr klein bemessen ist. Im Moment des Öffnens des Sitzventils 40 liegt somit an der elastischen Dichtung 48 die Druckdifferenz

$$\Delta p = p_1 - p_2 = F_{57}/A. \qquad (2)$$

Da die Federkraft $F_{57}$ sehr klein ist, ist die Druckdifferenz $\Delta p$ ebenfalls sehr klein. Diese geringe Druckdifferenz trägt zur Schonung der Dichtung 48, insbesondere der Dichtlippe 48a bei.

Sobald der Kolbenschieber 47 mit seiner Steuerkante 52 die Steuerkante 51 am Ventilgehäuse 16 überfährt, kann Hydrauliköl über die Steuerkanten 51, 52 strömen. Im ersten Ventilraum 34 stellt sich damit der Druck $p_2$ ein. Da der Druck $p_1$ in der vorderen Steuerkammer 43a etwas größer ist als der Druck $p_2$ in den beiden Ventilräumen 34, 35, bewegt sich der Steuerschieber 42 weiter, bis der Ringsteg 53 am Grunde der hinteren Steuerkammer 43b am Ventilgehäuse 16 anschlägt. Dadurch vergrößert sich die wirksame Druckbeaufschlagungsfläche des Steuerkolbens 41 von A auf A', wie dies in Figur 1 strichpunktiert eingezeichnet ist. Der Steuerschieber 42 wird in der Öffnungsendlage des Sitzventils 40 gehalten, und die Drosselbohrung 54 ist abgeschlossen. Nunmehr kann durch entsprechende Umsteuerung des Proportionalventils 24 in die eine oder andere Endlagenstellung der Druck in der Arbeitskammer 13 des Aktuators 10 erhöht oder reduziert werden.

In Figur 2 ist im Längsschnitt schematisch ein Druckhalteventil 120 dargestellt, wie es für eine Niveauregeleinrichtung von Fahrzeugen mit volltragendem, hydropneumatischen Fahrwerk eingesetzt wird, bei dem pro Fahrzeugachse zwei Aktuatoren versorgt werden müssen. Während die Hydraulikzylinder der Aktuatoren jeweils an einer Radaufhängung oder an der Achse befestigt sind, sind die Arbeitskolben an der linken bzw. rechten Seite des Fahrzeugaufbaus angelenkt. Das Druckhalteventil 120 stimmt mit dem Druckhalteventil 20 in Figur 1 in Aufbau und Funktionsweise weitgehend überein, so daß gleiche Bauteile mit gleichen Bezugszeichen gekennzeichnet sind, die jedoch zur Unterscheidung um jeweils 100 erhöht sind.

Im Unterschied zum Druckhalteventil 20 in Figur 1 weist das Druckhalteventil 120 gemäß Figur 2 zwei im Gehäuse 116 axial hintereinander angeordnete Sitzventile 140, 140' auf, die jeweils aus einem Ventilsitz 138 bzw. 138' und einem Ventilglied 139 bzw. 139' bestehen, wobei am Ventilsitz 138 bzw. 138' wiederum je eine Dichtung 148 bzw. 148' vorzugsweise eine elastomere Dichtung 148' angeordnet ist, die im Schließzustand des jeweiligen Sitzventils 140 bzw. 140' sich mit einer Dichtlippe 148a bzw. 148'a an dem Ventilglied 139 bzw. 139' anlegt. Zur Druckentlastung der Dichtungen 148, 148' im Schließzustand des jeweiligen Sitzventils 140 bzw. 140' schlägt das wiederum als Kolbenschieber 147 ausgebildete Ventilglied 139 des Sitzventils 140 mit einem radial überstehenden Ringflansch 159 an der der Ventilöffnung 136 des Sitzventils 140 vorgelagerten Ringschulter 150 an. Die beiden Ventilglieder 139, 139' werden gemeinsam von einem Steuerkolben 141 betätigt und sind zusammen mit diesem einstückig an einem Steuerschieber 142 ausgebildet, der eine längsdurchgehende Zentralbohrung 160 trägt. Wie schon erwähnt, ist das Ventilglied 139 als flanschförmiger Kolbenschieber 147 am Steuerschieber 142 ausgebildet, der mit einer Steuerkante 152 mit der an der Gehäuse-Ringschulter 150 ausgebildeten Steuerkante 151 zum Öffnen und Schließen der Ventilöffnung 136 des Sitzventils 140 zusammenwirkt. Das ebenfalls einen Kolbenschieber 147' darstellende andere Ventilglied 139' wird von dem Ende des Steuerschiebers 142 gebildet, der mit seiner ringförmigen Stirnfläche 161 auf der Dichtung 148' aufsitzt. Zum Sperren und Freigeben der Ventilöffnung 136' wirkt die an der Stirnfläche 161 außen verlaufende Steuerkante 152' mit der an einem radial vorspringenden Ringsteg 162 des Gehäuses 116 ausgebildeten Steuerkante 151' zusammen.

Jede Ventilöffnung 136 bzw. 136' verbindet einen ersten Ventilraum 134 bzw. 134' mit einem zweiten Ventilraum 135 bzw. 135'. In den ersten Ventilräumen 134, 134' mündet jeweils ein Versorgungsanschluß 117 bzw. 117', während in den zweiten Ventilräumen 135, 135' jeweils ein Arbeitsanschluß 115 bzw. 115' mündet. Die ersten Ventilräume 134, 134' stehen mit der hinteren Steuerkammer 143b des Steuerraums 143 in Verbindung, in welchem wiederum der Steuerkolben 141 axial verschieblich geführt ist. In der vorderen Steuerkammer 143a mündet wiederum der Steueranschluß 118. Der Steueranschluß 118 ist wie der Steueranschluß 18 in Figur 1 belegt. Ebenso werden die Versorgungsanschlüsse 117, 117' wie in Figur 1 jeweils mit einem Proportionalventil verbunden. An den Arbeitsanschlüssen 115, 115' ist wie in Figur 1 jeweils ein Aktuator angeschlossen.

Zur Erzielung eines weitgehenden Druckausgleichs an den Dichtungen 148, 148' der Sitzventile 140, 140' beim Öffnen des Druckhalteventils 120 ist im Steuerkolben 141 wiederum die Ausgleichsleitung als axial längsdurchgehende Bohrung 154 vorgesehen, die zusammen mit einem Dichtring ein als Flatterventil wirkendes Rückschlagventil 163 bildet, dessen Durchflußrichtung zur hinteren Steuerkammer 143b weist. Dieses Rückschlagventil wird in der Öffnungsendlage des Druckhalteventils 120 von dem Ringsteg 153 auf der die hintere Steuerkammer 143b begrenzenden Steuerkolbenfläche verschlossen, der sich an die Ringfläche 155 des Gehäuseabsatzes 156 anlegt.

In dem Ventilgehäuse 116 gibt es eine Verbindung 184. Diese führt von der Steuerkammer 143b in den ersten Ventilraum 134' und auf die dem zweiten Ventilraum 135' abgewandte Seite der Dichtung 148'. Bei nach oben betätigtem Steuerschieber 142 versperrt ein weiterer, an dem Steuerkolben 141 vorgesehener Ringsteg 153' die Einmündung der Verbindung 184 in die Steuerkammer 143b.

Damit beim Schließen des Sitzventils 140', d.h. wenn die Steuerkante 152' mit der Steuerkante 151' in Überdeckung kommt, das Druckmedium aus dem Bereich der Dichtung 148' nicht durch die Verbindung 184 in den ersten Ventilraum 134' strömen kann, ist in der Verbindung 184 ein diese ungewünschte Möglichkeit verhinderndes Rückschlagventil 185 angeordnet.

Das Sitzventil 140' entspricht in seiner Funktion dem Sitzventil 140.

In der Bohrungswand des Steuerschiebers 142 ist mindestens eine in die Zentralbohrung 160 mündende Drosselbohrung 164 derart angeordnet, daß sie in der Schließstellung des Druckhalteventils 120 zum zweiten Ventilraum 135 des Sitzventils 140 hin offen ist und mit Beginn der Verschiebebewegung des Steuerschiebers 142 von dem Ventilgehäuse 116 verschlossen wird. Da die Zentralbohrung 160 die Verbindung zu dem zweiten Ventilraum 135' des Sitzventils 140' und dem diesem zugeordneten Arbeitsanschluß 115' herstellt, sind in der Ventilschließstellung des Druckhalteventils 120 die beiden zweiten Ventilräume 135, 135' der beiden Sitzventile 140, 140' miteinander verbunden und damit ebenso die beiden Arbeitsanschlüsse 115 und 115'. Diese Drosselbohrung 164 ermöglicht somit einen Druckausgleich zwischen den Aktuatoren in der Schließstellung des Druckhalteventils 120, so daß bei Ausfall der Niveauregeleinrichtung, z.B. durch plötzliches Stromloswerden des Vorsteuerventils 30 in Figur 1, es nicht zu instabilen Fahrzeugzuständen infolge extrem unterschiedlicher Drücke in den beiden Aktuatoren kommt. Bei nach oben betätigtem Steuerschieber 142, d.h. bei normaler Betriebsstellung, ist die Droselbohrung 164 verschlossen und die beiden Aktuatoren sind unabhängig voneinander betätigbar.

Die Wirkungsweise des Druckhalteventils 120 gemäß Figur 2 ist identisch mit der Wirkungsweise des Druckhalteventils 20 in Figur 1, so daß auf die entsprechende Beschreibung verwiesen wird. Beide Sitzventile 140 und 140' werden synchron geöffnet und geschlossen, wobei an beiden Sitzventilen 140 und 140' die gleichen Druck- und Strömungsverhältnisse auftreten. Zu bemerken wäre, daß das Druckhalteventil 120 nicht geöffnet werden kann, solange die beiden Versorgungsanschlüsse 117 und 117' nicht von den Proportionalventilen abgeschlossen oder mit Druck beaufschlagt sind, da infolge der Verbindung der Versorgungsanschlüsse 117 und 117' mit der Druckmittelsenke, also dem Tank 26 in Figur 1, sich in der vorderen Steuerkammer 143a kein Steuerdruck zum Verschieben des Steuerkolbens 141 aufbauen kann.

Auch bei dem in Figur 1 dargestellten Ausführungsbeispiel kann man in der Drosselbohrung 54 ein dem Rückschlagventil 163 (Figur 2) entsprechendes Rückschlagventil anordnen, bzw. man kann, je nach Anwendungsfall, bei dem Ausführungsbeispiel der Figur 2 die Drosselbohrung 154 ggf. auch ohne das Rückschlagentil 163 ausführen.

In Figur 3 ist ein weiteres Ausführungsbeispiel des Druckhalteventils 120 im Längsschnitt und schematisch dargestellt, was gegenüber dem Druckhalteventil 120 in Figur 2 etwas modifiziert ist. Soweit in Figur 3 Bauteile mit solchen in Figur 2 übereinstimmen, sind sie mit gleichen Bezugszeichen gekennzeichnet.

Eine erste Modifikation besteht darin, daß die in Figur 2 zu sehende Bohrung 154 im Steuerkolben 141 mit Flatterventil 163 entfallen ist. Deren Funktion als Ausgleichsleitung zwischen vorderer und hinterer Steuerkammer 143a, 143b wird hier von einer Verbindungsleitung 165, welche die Steuerleitung 128 mit der hinteren Steuerkammer 143b verbindet, und einem in der Verbindungsleitung 165 angeordneten Rückschlagventil 166 mit zur hinteren Steuerkammer 143b weisender Durchflußrichtung übernommen. Die Mündung der Verbindungsleitung 165 in der hinteren Steuerkammer 143b wird wiederum in der Öffnungsendlage des Druckhalteventils 120 von dem Steuerkolben 141 abgeschlossen, wozu dieser einen in der hinteren Steuerkammer 143b liegenden, im Durchmesser reduzierten Kolbenabschnitt 167 aufweist, an dessen freier Stirnfläche eine kreisförmige Steuerkante 168 ausgebildet ist. Diese Steuerkante 168 wirkt mit einer weiteren Steuerkante 169 zusammen, die an einem radial vorspringenden Gehäuseabsatz 170 ausgebildet ist, dessen lichter Durchmesser wenig größer als der Durchmesser des Kolbenabschnitts 167 bemessen ist. Die Mündung der Verbindungsleitung 165 ist nahe des Gehäuseabsatzes 170 angeordnet. In der Öffnungsendlage des Druckhalteventils 120 trennen die beiden Steuerkanten 168, 169 einen Ringraum 171 von der hinteren Steuerkammer 143b ab, in welchem die Mündung der Verbindungsleitung 165 liegt, so daß letztere abgesperrt ist.

Des weiteren weist das Druckhalteventil 120 zwei weitere gesteuerte Ventilanschlüsse 172 und 173 auf, und stellt somit ein hydraulisch betätigtes 6/2-Sitzventil mit sechs gesteuerten Anschlüssen und zwei Ventilstellungen dar. Der Ventilanschluß 172 ist mit einer Rückführleitung 174 mit integrierter Drossel zum Tank 26 in Figur 1 und der Ventilanschluß 173 ist mit einer abgehenden Steuerleitung 175 verbunden, an welcher ein hydraulisches Steuersignal abnehmbar ist, und zwar dann, wenn das Druckhalteventil 120 voll geöffnet ist. Eine in den Steuerschieber 142 eingebrachte Ringnut 176 ist so angeordnet, daß sie in der Schließstellung des Druckhalteventils 120 beide Ventilanschlüsse 172 und 173 überdeckt und in der Offenstellung des Druckhalteventils 120 die vordere Steuerkammer 143a mit dem Ventilanschluß 173 verbindet. Damit gelangt Steuerdruck aus der vorderen Steuerkammer 143a in die Steuerleitung 175 und kann zur Auslösung eines anderen Steuervorgangs herangezogen werden. Über die Rückführleitung 174 wird Lecköl aus der vorderen Steuerkammer 143a abgeführt, so daß sich bei gesperrter Steuerleitung 128 das Druckhalteventil 120 nicht durch Leckölfluß aus der hinteren Steuerkammer 143b in die vordere Steuerkammer 143a mit der Zeit öffnen kann.

Zusätzlich ist in der Steuerleitung 128 ein 2/2-Wegeventil 177 mit Federrückstellung angeordnet, dessen hydraulischer Steueranschluß an einer der Druckleitungen 119 bzw. 119' zu den Versorgungsanschlüssen 117, 117' angeschlossen ist. Das 2/2-Wegeventil 177 steht in seiner Grundstellung auf Durchlaß und in seiner umgeschalteten Arbeitsstellung in Sperrstellung. Damit wird sichergestellt, daß bei einem Druckmitteldruck in einer der Druckleitungen 119, 119' eine Sperrung der Steuerleitung 128 erfolgt und somit ein Druckaufbau in der vorderen Steuerkammer 143a zum Öffnen des Druckhalteventils 120 unterbunden wird. Damit wird sichergestellt, daß das Druckhalteventil ausschließlich nur dann öffnet, wenn beide Versorgungsanschlüsse 117, 117' abgesperrt sind, die Proportionalventile also nicht in ihrer einen oder anderen Durchlaßstellung stehen. Dadurch werden sprunghafte unkontrollierte Fahrzeugaufbaubewegungen bei Inbetriebnahme des Fahrzeugs vermieden. Auf das 2/2-Wegeventil 177 kann verzichtet werden, wenn man die Druckbeaufschlagungsflächen am Steuerkolben 141 und Kolbenschieber 147 geeignet bemißt.

Die beschriebenen Druckhalteventile 20, 120 können in unveränderter Form auch bei pneumatischen Drucksteuervorrichtungen zum Halten eines eingestellten Drucks in mindestens einem druckluftbetätigten Arbeitszylinder eingesetzt werden.

In den drei dargestellten Ausführungsbeispielen handelt es sich bei der Dichtung 48, 148, 148' um eine an den Ventilsitz 38, 138, 138' angelegte bzw. angeklebte bzw. anvulkanisierte Lippendichtung aus elastischem, vorzugsweise weichelastischem Material. Genausogut kann die Dichtung 48, 148, 148' an dem Ventilglied 39, 139, 139' befestigt sein, wobei in diesem Fall die Dichtung 48, 148, 148' bei geschlossener Stellung des Druckhalteventils 20, 120 an dem Ventilsitz 38, 138, 138' anliegt. Die Dichtung 48, 148, 148' kann auch teilweise in eine an dem Ventilsitz 38, 138, 138' oder an dem Ventilglied 39, 139, 139' vorgesehen Nut eingelegt sein. Die Dichtung kann als umlaufende Dichtung mit rundem Querschnitt, sogenannter O-Ring, ausgebildet sein. Unter einer weichelastischen Dichtung werden hier alle aus Gummi oder elastisch verformbaren Kunststoff gefertigte Dichtungen verstanden.

**Patentansprüche**

1. Druckhalteventil, insbesondere für druckmittelbetätigte Niveauregeleinrichtungen in Fahrzeugen, mit mindestens einem Sitzventil, das eine zwei Ventilräume miteinander verbindende Ventilöffnung, von denen der erste Ventilraum mit einem wechselweise an einer Druckmittelquelle oder Druckmittelsenke anschließbaren Versorgungsanschluß und der zweite Ventilraum mit einem Arbeitsanschluß in Verbindung steht, einen Ventilsitz und ein mit dem Ventilsitz zusammenwirkendes, vom Druck in beiden Ventilräumen gegensinnig beaufschlagtes Ventilglied aufweist, und mit einem an dem Ventilglied angreifenden, über eine Steuerleitung druckmittelbeaufschlagbaren Steuerkolben zum Öffnen des Sitzventils, dadurch gekennzeichnet, daß eine zwischen dem Ventilsitz (38; 138, 138') und dem Ventilglied (39; 139, 139') abdichtende Dichtung (48; 148, 148') vorgesehen ist, daß Druckausgleichsmittel (54; 154, 163; 165, 166) vorgesehen sind, die bei Druckbeaufschlagung des Steuerkolbens (41; 141) in dem ersten Ventilraum (34; 134, 134') einen solchen Druck aufbauen, daß mit Öffnungsbeginn des Sitzventils (40; 140, 140') eine nur geringe Druckdifferenz an der Dichtung (48; 148, 148') auftritt, und daß das Ventilglied (39; 139, 139') derart ausgebildet ist, daß es bei Verschiebung in Schließrichtung des Sitzventils (40; 140, 140') mit Vorlauf vor dem Aufsetzen auf dem Ventilsitz (38; 138, 138') die Ventilöffnung (36; 136, 136') im wesentlichen schließt.

2. Ventil nach Anspruch 1, dadurch gekennzeichnet, daß die Druckausgleichsmittel eine die Steuerleitung (28; 128) zum Steuerkolben (41; 141) mit dem ersten Ventilraum (34; 134, 134') verbindende Ausgleichsleitung (54; 154, 165), in welcher eine Drossel (54) und/oder ein Rückschlagventil (163; 166) angeordnet ist, und eine Sperrvorrichtung (24) zum Absperren des im ersten Ventilraum (34; 134, 134') mündenden Versorgungsanschlusses (17; 117, 117') aufweist und daß die Ausgleichsleitung (54; 154; 165) in der Öffnungsendlage des Sitzventils (40; 140, 140') abgesperrt ist.

3. Ventil nach Anspruch 1 oder 2, dadurch gekennzeichnet, daß der mit dem Ventilglied (39; 139, 139') verbundene Steuerkolben (41; 141) in einem Steuerraum (43; 143) axial verschieblich geführt ist und diesen in eine mit der Steuerleitung (28; 128) verbundene vordere Steuerkammer (43a; 143a) und eine mit dem ersten Ventilraum (34; 134, 134') in Verbindung stehende hintere Steuerkammer (43b; 143b) unterteilt und daß der Steuerkolben (41; 141) so ausgebildet ist, daß jede seiner die Steuerkammern (43a, 43b; 143a, 143b) begrenzenden beiden Kolbenflachen größer ist als die durch den Aufsetzradius am Ventilsitz (38; 138, 138') umschlossene Fläche am Ventilglied (39; 139, 139').

4. Ventil nach Anspruch 3, dadurch gekennzeichnet, daß das Ventilglied (39; 139, 139') von einer Ventilschließfeder (57; 157) mit in Schließrichtung extrem geringer Vorspannung beaufschlagt ist.

5. Ventil nach Anspruch 3 oder 4, dadurch gekennzeichnet, daß die Ausgleichsleitung zwischen der Steuerleitung (28) und erstem Ventilraum (34) als eine Bohrung (54; 154) im Steuerkolben (41; 141) ausgebildet ist.

6. Ventil nach Anspruch 3 oder 4, dadurch gekennzeichnet, daß die Ausgleichsleitung zwischen der Steuerleitung (128) und erstem Ventilraum (134) als in der hinteren Steuerkammer (134b) mündende Verbindungsleitung (165) ausgebildet ist.

7. Ventil nach Anspruch 5 oder 6, dadurch gekennzeichnet, daß der Steuerkolben (41; 141) auf der die hintere Steuerkammer (43b; 143b) begrenzenden Kolbenfläche eine umlaufende Steuerkante trägt, die zusammen mit einer in der hinteren Steuerkammer (43b; 143b) ausgebildeten weiteren Steuerkante in der Öffnungsendlage des Sitzventils (40; 140) die Mündung der Ausgleichsleitung (54; 154; 165) von der hinteren Steuerkammer (43b; 143b) trennt.

8. Ventil nach Anspruch 5 und 7, dadurch gekennzeichnet, daß die Steuerkante am Steuerkolben (41; 141) an einem an der Kolbenfläche axial vorspringenden Ringsteg (53; 153) ausgebildet ist, der sich auf einem in die hintere Steuerkammer (43b; 143b) radial vorspringenden Gehäuseabsatz (37; 137) in der Öffnungsendlage des Sitzventils (40; 140) aufsetzt, und daß die Bohrung (54; 154) in einen zwischen dem Ringsteg (53; 153) und dem Steuerkolbenrand liegenden Kolbenbereich eingebracht ist.

9. Ventil nach Anspruch 8, dadurch gekennzeichnet, daß der Innendurchmesser des Ringstegs (53; 153) größer ist als der Auflagedurchmesser des Ventilglieds (39; 139, 139') auf dem Ventilsitz (38; 138, 138').

**10.** Ventil nach Anspruch 6 und 7, dadurch gekennzeichnet, daß die Steuerkante (168) am Steuerkolben (141) an einem vorspringenden, im Durchmesser reduzierten Kolbenabschnitt (167) und die Steuerkante (169) in der hinteren Steuerkammer (143b) an einem radial vorspringenden Gehäuseabsatz (170) ausgebildet ist, dessen lichter Durchmesser wenig größer als der Durchmesser des Kolbenabschnitts (167) ist, und daß die Mündung der Verbindungsleitung (165) in der hinteren Steuerkammer (143b) mir radialer Mündungsachse nahe dem Gehäuseabsatz (170) mit einem Abstand von diesem angeordnet ist, der kleiner ist als die axiale Länge des im Durchmesser reduzierten Kolbenabschnitts (167) (Figur 3).

**11.** Ventil nach einem der Ansprüche 1 bis 10, dadurch gekennzeichnet, daß in der Schließendlage des Sitzventils (40; 140, 140') das Ventilglied (39; 139) oder der Steuerkolben (41; 141) an einem gehäusefesten Anschlag (49, 150) anliegt.

**12.** Ventil nach einem der Ansprüche 2 bis 11, dadurch gekennzeichnet, daß die Sperrvorrichtung zum Absperren des ersten Ventilraums (34) von einem in Sperrstellung umgeschalteten Proportionalventil (24) gebildet ist.

**13.** Ventil nach einem der Ansprüche 1 bis 12, dadurch gekennzeichnet, daß das Ventilglied (39; 139, 139') als Kolbenschieber (47; 147, 147') ausgebildet ist, der mit seiner einen Stirnfläche auf dem Ventilsitz (38; 138, 138') aufsitzt und daß an einer in dem zweiten Ventilraum (35; 135, 135') im Abstand vom Ventilsitz (38; 138, 138') angeordneten radialen Ringschulter (50; 150, 162) eine kreisförmige Steuerkante (51; 151, 151') ausgebildet ist, die zusammen mit einer am Kolbenschieber (47; 147, 147') außen an seiner dem Ventilsitz (38; 138, 138') zugekehrten Kolbenstirnfläche umlaufenden Steuerkante (52; 152, 152') die Ventilöffnung (36; 136, 136') steuert.

**14.** Ventil nach einem der Ansprüche 2 bis 13, dadurch gekennzeichnet, daß in der Steuerleitung (28) zum Steuerkolben (41) eine Drosselstelle (33) ausgebildet ist.

**15.** Ventil nach einem der Ansprüche 3 bis 14, dadurch gekennzeichnet, daß zwei Sitzventile (140, 140') mit jeweils einem Ventilsitz (138, 138') und einem Ventilglied (139, 139') in Achsrichtung hintereinander angeordnet sind, daß der Steuerkolben (141) mit beiden Ventilgliedern (139, 139') zum synchronen Öffnen der Sitzventile (140, 140') verbunden ist, und daß beide ersten Ventilräume (134, 134') der Sitzventile (140, 140') mit der hinteren Steuerkammer (143b) des den Steuerkolben (141) aufnehmenden Steuerraums (143) verbunden sind.

**16.** Ventil nach Anspruch 15, dadurch gekennzeichnet, daß die beiden zweiten Ventilräume (135, 135') der beiden Sitzventile (140, 140') in deren Schließstellung durch eine Drosselstelle (164) miteinander verbunden sind.

**17.** Ventil nach Anspruch 15 oder 16, dadurch gekennzeichnet, daß der Steuerkolben (141) und die beiden als Kolbenschieber (147, 147') ausgebildeten Ventilglieder (139, 139') zu einer Kolbeneinheit (142) zusammengefaßt sind, daß die Kolbeneinheit (142) eine Bohrung (160) aufweist, die mit dem einen zweiten Ventilraum (135') direkt und mit dem anderen zweiten Ventilraum (135) über eine radiale Drosselbohrung (164) in Verbindung steht, und daß die Drosselbohrung (164) räumlich derart angeordnet ist, daß sie durch eine Axialverschiebung der Kolbeneinheit (142) vor Öffnen der beiden Ventilöffnungen (136, 136') verschlossen wird.

**18.** Ventil nach einem der Ansprüche 1 bis 17, dadurch gekennzeichnet, daß die Dichtung (48, 148, 148') aus einem elastischen, vorzugsweise weichelastischen Material besteht bzw. zumindest ein derartiges Material umfaßt.

**19.** Ventil nach Anspruch 18, dadurch gekennzeichnet, daß die Dichtung (48, 148, 148') mit dem Ventilsitz (38, 138, 138') verbunden ist.

**20.** Ventil nach Anspruch 18, dadurch gekennzeichnet, daß die Dichtung (48, 148, 148') mit dem Ventilglied (39, 139, 139') verbunden ist.

EP 0 513 528 A2

Fig. 1

10

Fig. 2

Fig. 3